(19) **Europäisches Patentamt**

**European Patent Office**

**Office européen des brevets**

(11) **EP 1 422 247 A2**

(12) **EUROPEAN PATENT APPLICATION**

(43) Date of publication:
26.05.2004 Bulletin 2004/22

(51) Int Cl.⁷: **C08F 8/00**

(21) Application number: **03078623.0**

(22) Date of filing: **12.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.11.2002 GB 0227003**

(71) Applicant: **SOLVAY POLYOLEFINS EUROPE -
BELGIUM (Société Anonyme)
1050 Bruxelles (BE)**

(72) Inventors:
• **Belforte, Antonio
1120 Brussels (BE)**
• **Rouyer, Virgile
1120 Brussels (BE)**

(74) Representative: **Smith, Julian Philip Howard et al
BP International Limited,
Group Patents & Agreements,
Chertsey Road
Sunbury-on-Thames, Middlesex TW16 7LN (GB)**

(54) **Crosslinking retarders for crosslinkable polyolefins**

(57) A process for reducing the rate of premature crosslinking under ambient conditions of an olefin copolymer or graft copolymer having hydrolysable silane groups is disclosed, comprising incorporating therewith a crosslinking retarder capable of reacting with said hydrolysable silane groups to form un-hydrolysable groups, in an amount sufficient to react with at least 5 mol% of the hydrolysable silane groups.

# Fig.1

**Description**

The present invention relates to crosslinkable polymer compositions comprising an olefin copolymer or graft polymer with hydrolysable silane groups, and more particularly to such compositions having a reduced rate of crosslinking in storage.

It is known to crosslink different polymers by means of additives. The crosslinking improves the properties of the polymer, such as its mechanical strength and heat resistance. Polymers normally considered to be thermoplastics and not crosslinkable can also be crosslinked by introducing crosslinkable groups into the polymer. An example of this is the crosslinking of polyolefins, such as polyethylene. A silane compound such as $CH_2=CH-Si(OMe)_3$ can be introduced as a crosslinkable group, e.g. by grafting the silane compound onto the prepared polyolefin, or by copolymerisation of the olefin and the silane compound. This technique has been known for many years. Crosslinking in this case is effected by exposing the polymer to water, which causes the grafted $Si(OMe)_3$ groups to hydrolyse to form Si-OH groups, adjacent ones of which (on different polymer chains) link in a condensation reaction to form very strong Si-O-Si crosslinks.

Crosslinking inevitably starts to occur in the presence of small amounts of moisture, such as can be present in the polymer itself, in processing equipment, or in the atmosphere. This can cause a number of problems. In processing by extrusion for example, it is important that no crosslinking occurs until after the mixture has left the extruder, as crosslinking or procuring in the extruder (or other corresponding equipment) makes it impossible to maintain a uniform production capacity, and furthermore the quality of the resulting product will be unsatisfactory: crosslinking results in gelation and adhesion of polymer gel to the surfaces of the equipment, with the ensuing risks of clogging etc, and increased necessity for shutdown and cleaning. Furthermore, any gel lumps which are extruded with the product form disfiguring and unwanted clots. In thin layers, for example films and foils, such lumps are unacceptable and in most cases make the product unusable.

One important consideration when manufacturing large objects such as large pipes is the requirement to be able to recycle off-specification product. For this to be possible, the product must not have crosslinked to such an extent that it can no longer be processed as a thermoplastic using conventional routes involving melting of the material.

In some instances also, it is desired to store the processed polymer before crosslinking, which is sometimes carried out after installation of the polymer article (e.g. a pipe). For example in certain large-scale applications like district heating, pipes of uncrosslinked polymer are installed and welded together by conventional routes such as butt-welding or electro-fusion joining (which requires them to have a gel content below a critical limit), and then the crosslinking is effected *in situ* simply by passing hot water through them in normal usage. In this application, there may be a significant delay between manufacture of the pipes and installation of the system, and again it is important that the pipes have not become crosslinked to such an extent that they cannot be welded together.

Degree of crosslinking is typically defined in terms of the gel content, which is the weight percentage of insoluble gel (i.e. crosslinked polymer) present in the material. It is generally considered that in the case of silane-crosslinkable polyethylene, at a gel content above 30%, a polymer is no longer thermoplastic in the common rheological sense, and hence cannot be processed or welded by conventional routes involving melting of the material. At the other extreme, in large-scale applications such as piping systems for district heating, floor heating or hot water plumbing, plastic articles require a minimum degree of crosslinking corresponding to a minimum level of gel content of 65% after complete curing, in order for the pipe to be considered to have acceptable physical properties for that application.

It is known to counteract unwanted precuring in processing equipment by incorporating in the polymer composition substances counteracting precuring, so-called procuring retarders or scorch retardant additives. For example in EP 193317A, to counteract the precuring of a crosslinkable, silane-containing copolymer composition comprising ethylene, an ethylenically unsaturated silane compound having a hydrolysable organic group and, optionally, another copolymerisable monomer, and a silanol condensation catalyst, there is added to the composition a precuring retarder in the form of 0.01-5 parts by weight of a silane compound with a hydrolysable organic group. The silane compound employed as a precuring retarder is preferably the same unsaturated silane compound which is included in the copolymer composition. The most preferred silane compounds are gammamethacryloxy-propyltrimethoxy silane, vinyltrimethoxy silane and vinyltriethoxy silane.

Furthermore, it is known from US 4043953 to produce a moisture-curable coating composition comprising a copolymer of an ethylenically unsaturated monomer and a copolymerisable organoalkoxy silane, and a curing accelerating catalyst, the pot-life of the composition being increased by adding to the composition 0.5-15 % by weight of a monomeric hydrolytically reactive organosilane compound represented by the formula $X_nSi(OR)_{4-n}$ wherein X is an organic radical having 1-12 carbon atoms, R is methyl, ethyl, 2-methoxyethyl, 2-ethoxyethyl or an acyl group having not more than 5 carbon atoms, and n is 0, 1 or 2.

Finally, WO 90/07542A discloses the use as precuring retarders of compounds having the formula R$(SiR'_nX_{3-n})_m$ wherein R is a monofunctional hydrocarbyl group having 13-30 carbon atoms, or a difunctional hydrocarbyl group having 4-24 carbon atoms, each R' which may be same or different, is a hydrocarbyl group having 1-10 carbon atoms, each X which may be same or different, is a hydrolysable organic group, n is 0, 1 or 2, and in is 1 or 2.

In all the above prior art, the precuring retarders function as water scavengers. Once the molecules have reacted with water they are no longer active, and as a consequence, for storage over long periods without protection, such retarders are ineffective.

We have found that by using a crosslinking retarder that blocks potential crosslinking sites, it is possible to reduce significantly the rate of unwanted crosslinking over long periods of time, thus preventing spontaneous and adventitious crosslinking during processing and storage, but without preventing the achievement of good final physical properties once curing has been completed and the material has been deliberately converted to its crosslinked form.

Accordingly in a first aspect the present invention provides a crosslinkable polymer composition comprising an olefin copolymer or an olefin graft copolymer having hydrolysable silane groups, wherein at least 5mol% of said hydrolysable silane groups have been converted into un-hydrolysable groups.

A further aspect of the invention provides a process for making a crosslinkable polymer composition, comprising the steps of forming an olefin copolymer or an olefin graft copolymer having hydrolysable silane groups, and then incorporating therewith a crosslinking retarder capable of reacting with said hydrolysable silane groups to form un-hydrolysable groups, in an amount sufficient to react with at least 5 mol% of the hydrolysable silane groups.

By "un-hydrolysable" is meant that upon exposure to moisture during normal processing or storage, the group will not hydrolyse. Usually un-hydrolysable groups will not be hydrolysed even during the full curing process. However the invention also includes within its scope any groups which whilst being resistant to hydrolysation during exposure to moisture during normal processing or storage, may be hydrolysed when subjected to the more severe conditions of the curing process where high temperatures and high humidity levels prevail.

The proportion of hydrolysable silane groups converted into un-hydrolysable groups in the composition of the invention, or the amount (as calculated below) of compound capable of reacting with hydrolysable silane groups which is added, may be up to 50mol%. A preferred range is between 5 and 25mol%, more preferably between 7 and 15mol%.

Without the presence of any crosslinking retarder as defined above, olefin copolymers or graft copolymers having hydrolysable silane groups typically reach a gel content of 30% (the maximum limit for retention of thermoplastic properties) within about 6-8 days after processing when stored at ambient temperature and humidity, although this depends to a certain extent on the thickness of the article concerned. We have found that if a crosslinking retarder as defined above is added in an amount sufficient to convert at least 5% of the hydrolysable silane groups to unhydrolysable groups, this time period can be significantly extended. As previously mentioned, for certain applications a minimum degree of crosslinking of 65% is required after curing, and preferred levels of conversion of the hydrolysable silane groups to unhydrolysable groups enable that level to be reached despite the reduction in the rate of premature crosslinking.

Examples of crosslinking retarders include silanols and alcohols.

Preferred crosslinking retarders have the formula $(HO)_n\text{-}Si\text{-}R_{4-n}$ where R is a hydrocarbyl or hydrocarbyloxy group and n is from 1 to 3. Each molecule of $HO\text{-}Si\text{-}R_3$ can convert one silane group to unhydrolysable $Si\text{-}O\text{-}Si\text{-}R_3$ groups. In the case of $(HO)_2\text{-}Si\text{-}R_2$ or $(HO)_3\text{-}Si\text{-}R$, the average number of silane groups converted is greater than 1, as in some cases two OH groups on the same crosslinking retarder molecule can react with adjacent silane groups in the polymer. It will be appreciated therefore that to convert a specific proportion of hydrolysable silane groups, fewer moles of $(HO)_2\text{-}Si\text{-}R_2$ will be required than moles of $HO\text{-}Si\text{-}R_3$.

Preferably R is a hydrocarbyl group of at least 4 carbon atoms, or a hydroxy or $C_1\text{-}C_6$ alkoxy group. Preferred R groups in the crosslinking retarders of the formula $(HO)_n\text{-}Si\text{-}R_{4-n}$ include alkyl and aryl groups such as phenyl or t-butyl. Particularly preferred crosslinking retarders include diphenyl silanediol and triphenyl silanol.

Other preferred crosslinking retarders include substituted phenols where the aromatic rings are substituted by hydrocarbyl or hydrocarbyloxy groups. For monofunctional substituted phenols, preferred substituent groups on the aromatic ring include bulky alkyl and aryl groups such as t-butyl or dodecyl.

Still other preferred crosslinking retarders are heavy aliphatic alcohols having a boiling point above 200°C, such as dodecanol.

The crosslinkable polymer composition in which the crosslinking retarder is incorporated comprises a silane-containing copolymer or graft polymer, by which is meant an olefin polymer, preferably an ethylene homopolymer or ethylene copolymer, containing crosslinkable silane groups which have been introduced either by copolymerisation or reactive grafting. Preferably, the silane-containing polymer has been obtained by grafting onto a polyolefin, suitably polyethylene, an unsaturated silane compound represented by the formula $R\text{-}Si\text{-}R^1_x Y_{3-x}$ wherein R is an ethylenically unsaturated hydrocarbyl, hydrocarbyloxy or (meth)acryloxyhydrocarbyl group, $R^1$ is an aliphatic saturated hydrocarbyl group, each Y is independently a hydrolysable organic group, and x is 0, 1 or 2.

Preferred examples of the unsaturated silane compound are those wherein R is vinyl, allyl, isopropenyl, butenyl, cyclohexenyl or gamma-(meth)acryloxypropyl, Y is methoxy, ethoxy, formyloxy, acetoxy, propionyloxy or an alkyl or arylamino group, and R' is a methyl, ethyl, propyl, decyl, or phenyl group.

A preferred unsaturated silane compound is represented by the formula:

$CH_2=CH-Si(OA)_3$ wherein A is a hydrocarbyl group having 1-8 carbon atoms, preferably 1-4 carbon atoms. The most preferred compounds are vinyltrimethoxy silane, vinylbismethoxyethoxy silane, vinyltriethoxy silane, gamma-(meth) acryloxypropyltrimethoxy silane, gamma-(meth)-acryloxypropyltriethoxy silane and vinyltriacetoxy silane.

The grafting of the unsaturated silane compound onto the polyolefin (polyethylene) may be carried out under well known conditions for producing silane-crosslinkable polyethylene, notably using small amounts of peroxide as initiator. The polymerisation of the olefin (ethylene) may optionally have been carried out in the presence of one or more further comonomers which are copolymerisable with the olefin (ethylene) monomer and which, for example, consist of: (a) vinylcarboxylate esters, such as vinyl acetate and vinyl pivalate, (b) alpha olefins, such as propylene, butene-1, 1-hexene, 1-octene, and 4-methyl-pentene, (c) (meth)acrylates, such as methyl(meth)acrylate, ethyl (meth) acrylate and butyl (meth)acrylate, (d) olefinically unsaturated carboxyl acids, such as (meth)acrylic acid, maleic acid and fumaric acid, (e) (meth)acrylic acid derivatives, such as (meth)acrylonitrile and (meth)acrylamide, (f) vinyl ethers, such as vinylmethyl ether and vinylphenyl ether and (g) aromatic vinyl compounds, such as styrene and a-methyl styrene. Preferred additional comonomers are vinyl esters of monocarboxylic acids having 1-4 carbon atoms, such as vinyl acetate, and (meth)acrylate of alcohols having 1-4 carbon atoms, such as methyl(meth)acrylate. Especially preferred comonomers are butyl acrylate, ethyl acrylate and methyl acrylate. Two or more of these olefinically unsaturated compounds may be used in combination.

The silane-containing polymer according to the invention typically has a grafted silane compound content of 0.01-15 % by weight, preferably 0.1-10 % by weight, most typically 1-7% by weight.

In order to promote crosslinking when desired, any known silane condensation catalyst may be incorporated in the composition of the invention. More particularly, however, they are chosen among carboxylates of metals, such as tin, zinc, iron, lead and cobalt, organic bases; inorganic acids and organic acids.

Particular examples of silane condensation catalysts include dibutyl tin dilaurate, dibutyl tin diacetate, dioctyl tin dilaurate, stannous acetate, stanneous caprylate, lead naphthenate, zinc caprylate, cobalt naphthenate, ethyl amines, dibutyl amine, hexyl amines, pyridine, inorganic acids, such as sulphuric acid and hydrochloric acid, and organic acids, such as toluene sulphonic acid, acetic acid, stearic acid and maleic acid. Especially preferred catalyst compounds are the tin carboxylates.

The amount of the silane condensation catalyst is generally in the order of 0.001-10 % by weight, preferably 0.005-3 % by weight, especially 0.01-1 % by weight, in relation to the total weight of the composition.

The crosslinkable polymer may contain various known additives, such as miscible thermoplastics, stabilisers, lubricants, fillers, colouring agents, and foaming agents. Examples of fillers include inorganic fillers such as silicates, e.g. kaolin, talc, montmorillonite, zeolite, mica, silica, calcium silicate, asbestos, powdered glass, glass fibre, calcium carbonate, gypsum, magnesium carbonate, magnesium hydroxide, carbon black, titanium oxide and the like. The content of such inorganic fillers may be as much as 60 % by weight, based on the sum of the weights of the filler and the silane-containing polymer.

In the process of the invention, the crosslinking retarder is added to the crosslinkable polymer composition and uniformly distributed therein during processing. It is preferred that the crosslinking retarder is a solid or a liquid at a typical extruder temperature of 200°C. If the crosslinking retarder is a solid, it can be added to the polymer composition in the form of a powder and be homogeneously distributed in the polymer composition by kneading it together with said composition. The kneading may for example be carried out in an extruder. If the crosslinking retarder is a liquid at room temperature, the addition may be carried out in the same manner as with the solid, i.e. by kneading with the polymer composition, e.g. in an extruder. It is then also possible to carry out the addition by impregnating the polymer composition with the crosslinking retarder, e.g. by spraying the crosslinking retarder, preferably atomised through a nozzle over the polymer composition which usually is in the form of pellets or a powder.

During spraying of the crosslinking retarder, the polymer composition may, if so desired, be mixed or tumbled, to further improve the distribution of the crosslinking retarder. If the temperature is suitable, the satisfactory compatibility with the polymer produces an efficient migration of the retarder into the polymer phase. Alternatively, the crosslinking retarder can also be added to the crosslinkable polymer composition by diluting in the polymer, in the molten state, a solid masterbatch compound which has been prepared by mixing in an appropriate concentration the retarder with a polymer compatible with the crosslinkable polymer composition.

EXAMPLE 1

Fonnulation A: A commercially available HDPE, Eltex® A2008LG, was grafted with 2wt% vinyl tri-methoxy silane (VTMOS), $CH_2=CH-Si(OMe)_3$, in the presence of peroxide DHBP, in a grafting process as is well-known in the art.

Formulation B: A "masterbatch" crosslinking condensation catalyst formulation was also prepared, comprising an HDPE base resin Eltex® B4002 and 0.35wt% of a commercially available silane condensation catalyst Metatin 812 (dioctyl tin dilaurate).

Formulation C: A "masterbatch" crosslinking retarder formulation was prepared, by mixing in a high rotation-speed helicoidal kneading machine Eltex® A4009PFN1324 HDPE base resin with 20 wt% of either triphenyl silanol HO-Si-Ph$_3$ or diphenyl silanediol (HO)$_2$-Si-Ph$_2$, which are both solid powders at room temperature.

EXAMPLES 2-10

Compositions comprising Formulation A (pellets), B (pellets) and varying amounts of C (powder) were prepared by calendering them together on a two-roll mill at 200°C for 15 minutes under high shear conditions (roller speed = 40rpm, friction rate = 1.15), so as to ensure good homogeneity of the mixture. Amounts of the three components are shown in Table 1 below; in all cases, the catalyst Formulation B is approximately 5wt% relative to the grafted HDPE Formulation A. The effective silane group conversion value is a measure of the proportion of hydrolysable silane groups in the polymer which have been theoretically "neutralised" to form un-hydrolysable groups, and is calculated as follows:

$$Effective\ Silane\ Conversion\ =\ \frac{\left(0.20 \times \beta \times m_{(C)}\right)/M_{(retarder)}}{\left(3 \times m_{(A)} \times 0.02\right)/M_{(VTMOS)}}\ ,$$

where:
$\beta$ = 1 for for triphenyl silanol and 2 for diphenyl silanediol ; $m_{(C)}$ and $m_{(A)}$ are the introduced weights of formulations C and A respectively ; $M_{(retarder)}$ = 276 g/mol for triphenyl silanol and 216 g/mol for diphenyl silanediol ; $M_{(VTMOS)}$ = 148 g/mol
It should be noted that the weight ratio of diphenyl silanediol to polymer A is about half that of triphenyl silanol to polymer A, as diphenyl silanediol has twice as many potential sites for "neutralisation" (two silanol Si-OH groups) as the triphenyl compound. However in practice it is likely that not all of these potential sites are used for steric reasons.

TABLE 1

| EX. | C -crosslinking retarder | A -silane grafted HDPE (g) | B -condensation catalyst (g) | C -crosslinking retarder (g) | Effective silane group conversion (mol%) |
|---|---|---|---|---|---|
| 2 | None | 171.5 | 8.5 | - | - |
| 3 | triphenyl silanol | 111.0 | 6.0 | 63 | 100 |
| 4 | | 142.5 | 6.5 | 31 | 39 |
| 5 | | 156.5 | 8.5 | 15 | 17 |
| 6 | | 163.6 | 8.9 | 7.5 | 8 |
| 7 | diphenyl silanediol | 142.5 | 7.5 | 30 | 75 |
| 8 | | 156.5 | 8.5 | 15 | 34 |
| 9 | | 163.6 | 8.9 | 7.5 | 16 |
| 10 | | 167.6 | 8.9 | 3.75 | 8 |

Immediately after calendering in the two-roll mill, the resultant sheets of polymer were introduced into a Collin Press (190°C; 80 Bar) so as to produce compression moulded plaques either 2mm or 4mm thick at a controlled cooling rate of 15°C/min.
For each of the above Examples 2-10, the 4mm plaques were divided into two groups. A first group was plunged into a 80°C water bath for 3 days; this time period is known to be sufficient to fully complete the crosslinking reaction in a 4mm plaque of a conventional crosslinkable silane-grafted polymer composition such as Example 2. At the end of this period, the gel content of the plaques was measured.
The second group of 4mm plaques was placed in a so-called "tropical" room, at 40°C / 50% RH, for a period of five weeks. At specific times (1 day, 1 week, 5 weeks), plaques were removed and the gel content measured.
Gel content was measured according to ISO 10147. Samples were weighed, plunged into boiling xylene for a fixed period of time, and the insoluble material remaining collected in a filter, dried and weighed. Gel content is the percentage of insoluble material recovered compared with weight of the initial sample.
The results of the gel content measurements are shown in Table 2 below.

Hot Creep Test

Additionally, in order to confirm the connection between gel content and degree of crosslinking, as well as the effects of introduced retarders, samples of the polymers of all the above Examples were first completely crosslinked by immersing 2mm plaques in 80°C water for 3 days and then subjected to a hot creep test. This test was performed under conditions similar to those specified in ICEA T-28-562 (1995) standard, which is a well-known test for determining relative degree of crosslinking, and is sometimes considered as being closer to real conditions than a classical solvent extraction procedure. For each Example, five dumb-bell shaped specimens as specified in § 9 of IEC 60811-1-1 (2001) were prepared, and marked with 20mm gauge marks in their central region (4mm wide). They were hung in an oven at 150°C, and a dead weight of 160 grams attached, corresponding to a stress of 0.20 MPa in the effective cross-section. After 15 minutes, the distance between gauge marks was measured on each specimen (without removing it from the oven), and the Hot Creep Elongation calculated in % as follows: $C = 100 * (\delta L)/L_0$, where $\delta L = (L - L_0)$. Immediately after, the weight was removed and the specimen allowed to remain for another 5 minutes in the oven; it was then removed and allowed to slowly cool down to room temperature for at least 1 hour, at which time the distance between gauge marks was again measured to calculate the Hot Creep Set Elongation in % : $S = 100 * (\delta L_{final})/L_0$, where $\delta L_{final} = (L_{final} - L_0)$. Results are shown in Table 2 below; the greater the elongation, the lower the crosslinking level, and hence the higher the degree of silane group conversion caused by the crosslinking retarder. A fully crosslinked material would be expected to have an elongation of about 20%, whilst for a material with no crosslinking the elongation would be expected to be at least 100%.

TABLE 2

| EX | Crosslinking retarder | Effective silane group conversion % | Gel content % | | | | Hot creep elongation 150°C/ 0.20MPa /15 min. % |
|---|---|---|---|---|---|---|---|
| | | | 3 days in water @ 80°C | 1 day @ 40°C/50% RH | 1 week @ 40°C/50% RH | 5 weeks @ 40°C/50% RH | |
| 2 | None | 0 | 68 | 24 | 29 | 44 | 17.1 |
| 3 | Triphenyl silanol | 100 | 43 | 0 | 3 | 14 | 136.5 |
| 4 | | 39 | 56 | 4 | 9 | 25 | - |
| 5 | | 17 | 63 | 2 | 7 | 26 | - |
| 6 | | 8 | 65 | 2 | 6 | 27 | 24.8 |
| 7 | Diphenyl silanediol | 75 | 57 | 8 | 14 | 28 | 33.4 |
| 8 | | 34 | 63 | 11 | 15 | 32 | - |
| 9 | | 16 | 66 | 24 | 31 | 45 | - |
| 10 | | 8 | 67 | 11 | 17 | 37 | 19.7 |

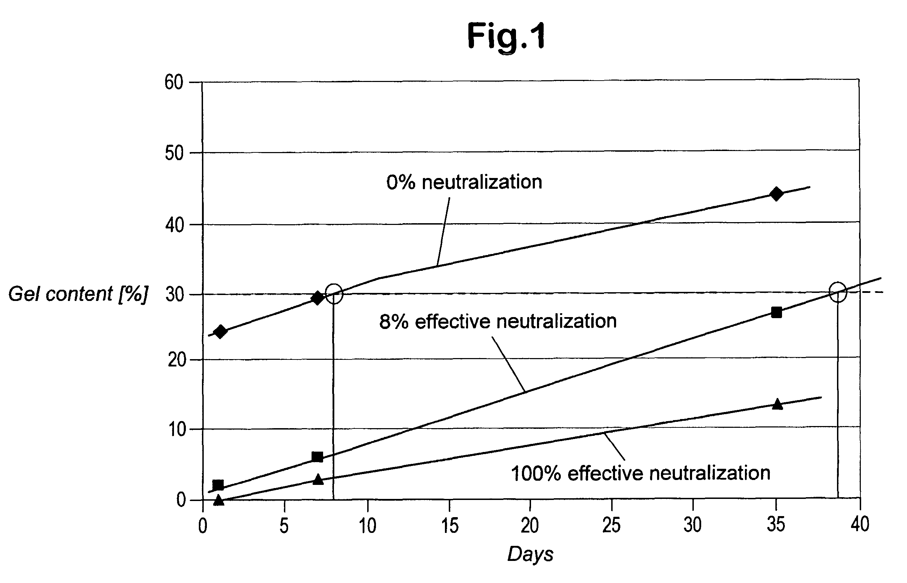

Some of the results of Table 2 are shown graphically in Figures 1 to 3.

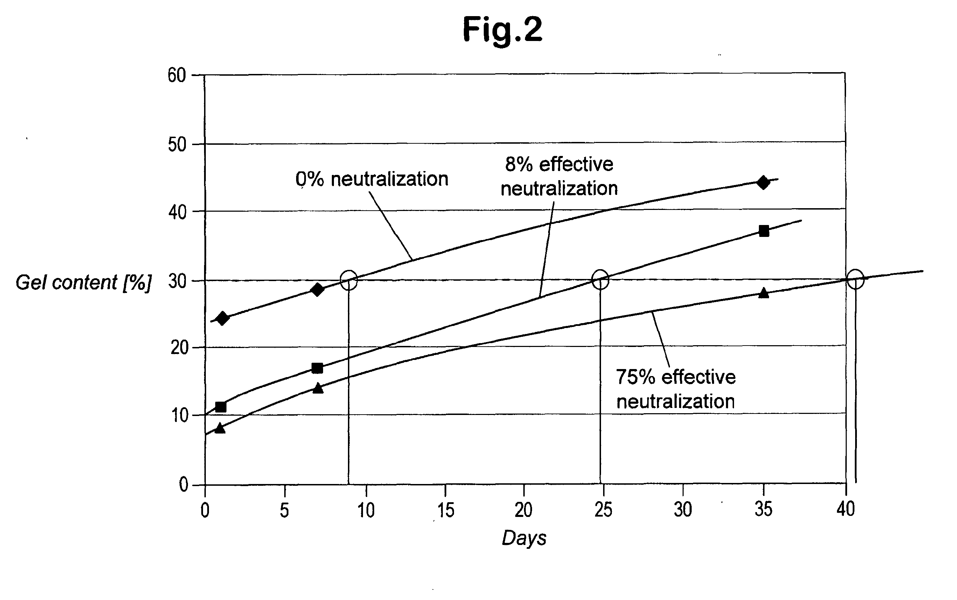

In Figures 1 and 2, gel content is plotted against time for the various levels of crosslinking retarder; Figure 1 is for triphenyl silanol and Figure 2 is for diphenyl silanediol. It can be seen that with no crosslinking retarder the critical limit of 30% gel content is reached within about 1 week. However with sufficient crosslinking retarder present to convert just 8% of the silane groups, the 30% critical threshold is not reached even after five weeks in the case of triphenyl silanol, and diphenyl silanediol is almost as effective. This means that such a composition remains as a thermoplastic material in the common rheological sense, thus enabling an article made thereof to be welded during system installation, or recycled in case of off-spec production, even after several weeks of storage following manufacture, and even in such severe storage conditions as 40°C / 50% RH.

With sufficient crosslinking retarder present to convert 100% of the silane groups, the retardation of premature crosslinking is even better, as would be expected: however it can be seen that in order to prevent the 30% critical threshold being reached for several weeks, relatively low levels of retarder are more cost-effective.

Table 2 also shows the effect of crosslinking retarder on final level of crosslinking, as determined by gel content after immersion in water at 80°C for 3 days. A figure of 65% or more is regarded as an acceptable degree of crosslinking for certain applications. It can be seen that this is achieved with levels of crosslinking retarder which results in silane group conversion levels of up to between 20 and 30%. At higher levels of crosslinking retarder, it is possible that after completion of the voluntary curing the final product may not be sufficiently crosslinked for certain requirements. However such levels for crosslinking retarders are not necessary in order to slow premature crosslinking adequately for most requirements.

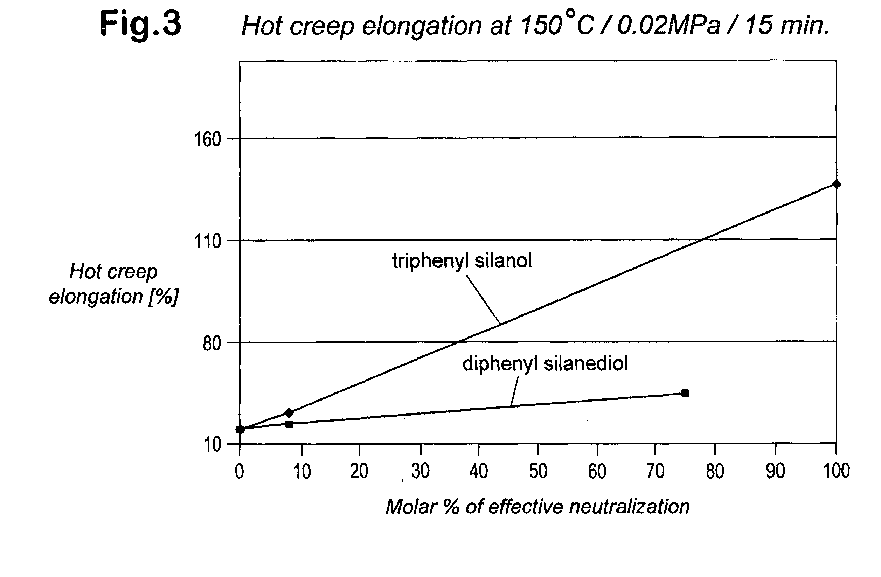

Figure 3 shows the results of the hot creep test for triphenyl silanol. With no crosslinking retarder present, the elongation is 17%, which is approximately what would be expected from a fully crosslinked material, and thus confirms the accuracy of the gel content measurement of 68% after 3 days at 80°C. At an effective silane group neutralisation of 100%, the elongation is 136%, which shows that only limited crosslinking has occurred. At an effective silane group neutralisation of 8% (which delayed the time to reach 30% gel content from one week to five weeks), the elongation is 25%, indicating that the physical properties of the sample are similar to those of a fully crosslinked sample. Thus the present invention permits a substantial retardation of premature crosslinking during storage without adversely affecting the final physical properties of the material.

## Claims

**1.** Crosslinkable polymer composition comprising an olefin copolymer or an olefin graft copolymer having hydrolysable silane groups, wherein at least 5mol% of said hydrolysable silane groups have been converted into un-hydrolysable groups.

**2.** Composition according to claim 1, wherein the proportion of hydrolysable silane groups converted into un-hydrolysable groups is no more than 50mol%, preferably no more than 25mol%, and more preferably between 7 and 15mol%.

**3.** Process for making a crosslinkable polymer composition, comprising the steps of forming an olefin copolymer or graft copolymer having hydrolysable silane groups, and incorporating therewith a crosslinking retarder capable of reacting with said hydrolysable silane groups to form un-hydrolysable groups, in an amount sufficient to react with at least 5 mol% of the hydrolysable silane groups.

**4.** Process according to claim 3, wherein the amount of crosslinking retarder added is sufficient to react with no more than 50mol%, preferably no more than 25mol%, and more preferably between 7 and 15mol% of the hydrolysable silane groups.

**5.** Composition or process according to any preceding claim, wherein the hydrolysable silane groups have the formula $-Si(OA)_3$ where A is a hydrocarbyl group having 1-8 carbon atoms.

**7.** Composition or process according to any preceding claim, wherein the crosslinking retarder comprises a silanol or alcohol.

**8.** Composition or process according to claim 7, wherein the crosslinking retarder comprises a compound of the formula $(HO)_n-Si-R_{4-n}$ wherein R is a hydrocarbyl group of at least 4 carbon atoms, or a hydroxy or $C_1-C_6$ alkoxy group, and n is an integer from 1 to 3.

**9.** Composition or process according to claim 8, wherein the crosslinking retarder comprises diphenyl silanediol or triphenyl silanol.

**10.** Use of a silanol or alcohol to reduce the rate of premature crosslinking under ambient conditions of an olefin copolymer or graft copolymer having hydrolysable silane groups.

Fig.1

# Fig.2

**Fig.3** *Hot creep elongation at 150°C / 0.02MPa / 15 min.*

Hot creep elongation [%]

triphenyl silanol

diphenyl silanediol

*Molar % of effective neutralization*

EP 1 422 247 A2